# EUROPEAN PATENT APPLICATION

(11) **EP 3 800 050 A1**
(43) Date of publication of application: **07.04.2021**
(21) Application number: 20198486.1
(22) Date of filing: 06.06.2013
(51) Int. Cl.: B32B 37/00, D04H 1/42, D04H 11/00, D04H 13/00, C08J 5/04

(54) **FORMATION OF A SHAPED FIBER WITH SIMULTANEOUS MATRIX APPLICATION**

(30) Priority: 14.06.2012 US 201213523087
(62) Divisional of application: 13170933.9
(71) Applicant: The Boeing Company, Chicago, IL 60606-1596 (US)
(72) Inventor: WILENSKI, Mark S., Chicago, IL 60606-1596 (US); KOZAR, Michael P., Chicago, IL 60606-1596 (US)
(74) Representative: Boult Wade Tennant LLP

(57) **Abstract**

A coated fiber for a composite article may include a fiber body and a matrix layer. The fiber body may have at least one fiber surface. The matrix layer may at least partially coat the fiber surface and may be applied during formation of the fiber body.

## Description

### FIELD

The present disclosure relates generally to composites and, more particularly, to the manufacturing of fiber-reinforced composite articles having improved optical performance.

### BACKGROUND

Conventional processes for manufacturing composite articles include providing a dry fiber preform containing a plurality of fibers. The dry fiber preform may be positioned on a forming tool that approximates the final shape of the composite article. After the dry fiber preform is positioned on the forming tool, resin may be separately applied to the dry fiber preform. For example, liquid resin from a resin container may be infused into the dry fiber preform using vacuum pressure. Heat and/or pressure may be applied to the resin-infused preform which may be cured or solidified to form the composite article.

Although separately infusing resin into a dry fiber preform is a generally satisfactory technique for forming composite articles, the process includes several drawbacks that detract from its overall utility. For example, separately infusing the dry fiber preform with liquid resin requires the use of specialized equipment such as a resin container, resin conduits, flow media, and vacuum equipment. The need for specialized equipment increases the complexity of the process and adds to the overall cost and time required for producing composite articles.

In another process for manufacturing composite articles, thin films of resin may be applied between layers of dry fiber to form a composite layup on a forming tool. Heat may be applied to the composite layup to reduce the viscosity of the resin film and cause the resin to flow, intermingle, and infuse the layers of the dry fiber. Heat and/or pressure may also be applied during curing of the composite layup. Although the use of thin films of resin may reduce some of the complexity associated with providing resin to dry fiber, the need to position individual layers of resin film with the layers of dry fiber results in a process that is labor-intensive and time-consuming.

Another drawback associated with conventional processes for manufacturing composite articles is related to the desire to provide individual fibers with a specific cross-sectional shape. For example, it may be desirable to provide each fiber with planar surfaces and relatively sharp corners to improve the optical performance of the composite article. Unfortunately, conventional processes for manufacturing fibers result in rounding of the surfaces and the corners of the fibers due to surface energy effects. The rounded surfaces and corners of the fibers may result in the optical distortion of light passing through the composite article which may reduce the optical performance of the composite article.

As can be seen, there exists a need in the art for a system and method for manufacturing a composite article that eliminates the time, cost, and complexity associated with applying resin to a composite layup. In addition, there exists a need in the art for a system and method for manufacturing fibers for a composite article wherein the fibers are provided with planar surfaces and relatively sharp corners.

### BRIEF SUMMARY

The above-described needs associated with composites manufacturing are specifically addressed and alleviated by the present disclosure which, in an embodiment, provides a coated fiber for a composite article. The coated fiber may include a fiber body and a matrix layer. The fiber body may have at least one fiber surface. The matrix layer may at least partially coat the fiber surface and may be applied during formation of the fiber body.

Also disclosed is a composite article which may be formed using a plurality of fiber bodies. Each one of the fiber bodies may have at least one fiber surface. A matrix layer may at least partially coat the fiber surface of at least one of the fiber bodies. The matrix layer may be applied substantially simultaneously with the forming of the fiber body.

In addition, disclosed is method of manufacturing a coated fiber for a composite article. The method may include the step of forming a fiber body having at least one fiber surface. The method may also include the step of applying a matrix layer to the fiber surface substantially simultaneous with the forming of the fiber body.

In a further embodiment, disclosed is a method of forming a composite article which may include the step of providing a plurality of coated fibers wherein each one of the coated fibers may be comprised of a fiber body that is coated with matrix material during formation of the fiber body. The method of forming the composite article may further include reducing the viscosity of the matrix material to cause intermingling of the matrix material of the plurality of the coated fibers. The method of forming the composite article may additionally include curing and/or hardening the matrix material to form the composite article.

Also disclosed is a method of loading a composite article. The method may include providing a composite article formed from a plurality of coated fibers wherein each one of the coated fibers comprising a fiber body and a matrix layer applied to the fiber body substantially simultaneous with the forming of the fiber body. The method of using the composite article may further include placing the composite article in a non-loaded condition. The method of using the composite article may additionally include placing the composite article in a loaded condition.

The features, functions and advantages that have been discussed can be achieved independently in various embodiments of the present disclosure or may be combined in yet other embodiments, further details of which can be seen with reference to the following description and drawings below.

### BRIEF DESCRIPTION OF THE DRAWINGS

These and other features of the present disclosure will become more apparent upon reference to the drawings wherein like numerals refer to like parts throughout and wherein:
Figure 1 is a perspective view of a composite article configured as a composite panel;
Figure 2 is an enlarged view of a portion of the composite article of Figure 1 and illustrating a plurality of fiber bodies embedded within a matrix material;
Figure 3 is a side view of the composite article of Figure 2 and illustrating layers of the fiber bodies arranged in a cross-ply configuration;
Figure 4 is a cross-sectional view of a coated fiber comprising a fiber body having a coating of matrix material that may be applied simultaneous with the forming of the fiber body;
Figure 5 is an end view of a plurality of the coated fibers of Figure 4 in a first state prior to the heating of the matrix material;
Figure 6 is an end view of a plurality of fiber bodies of Figure 4 in a second state following heating and intermingling of the matrix material of the different coated fibers;
Figure 7 is a schematic illustration of an embodiment of a fiber-matrix forming apparatus for forming coated fibers;
Figure 8 is an enlarged view of a nozzle of the fiber-matrix forming apparatus and illustrating the application of the matrix material to the fiber body as the fiber body is drawn from the nozzle;
Figure 9 is a cross-sectional view of the nozzle illustrating a matrix layer die surrounding a fiber body die;
Figure 10 is a cross-sectional view of an embodiment of a coated fiber formed using the fiber-matrix forming apparatus and illustrating a generally sharp, non-rounded configuration of the fiber body corners and the generally planar, non-rounded fiber surfaces;
Figure 11 is a schematic illustration of a nozzle of a fiber forming apparatus for drawing fiber material without the application of matrix material;
Figure 12 is a cross-sectional view of the nozzle of the fiber forming apparatus of Figure 11;
Figure 13 is a cross-sectional view of a fiber formed using the nozzle of Figure 12 and further illustrating the rounded surfaces and rounded corners of the fiber as a result of surface energy effects;
Figure 14 is a cross-sectional view of a plurality of light rays passing through a composite article formed using the coated fibers and illustrating minimal differences in the resultant angles and path lengths of the light rays;
Figure 15 is a cross-sectional view of a coated fiber wherein the matrix material in the fiber body corners is applied at an increased thickness;
Figure 16 is an end view of a plurality of the coated fibers of Figure 15 in a first state prior to the heating of the matrix material;
Figure 17 is an end view of a plurality of the fiber bodies of Figure 15 in a second state following heating and intermingling of the matrix material of the different coated fibers;
Figure 18 is a cross-sectional view of an embodiment of a coated fiber having an upper surface matrix thickness that is different than a lower surface matrix thickness;
Figure 19 is a cross-sectional view of a further embodiment of a coated fiber having side surface matrix thicknesses that are different than the upper and lower surface matrix thickness;
Figure 20 is a cross-sectional view of an embodiment of a coated fiber having a trapezoidal cross-sectional shape;
Figure 21 is a cross-sectional view of an embodiment of a coated fiber having a triangular cross-sectional shape;
Figure 22 is a cross-sectional view of an embodiment of a coated fiber having a diamond cross-sectional shape;
Figure 23 is a cross-sectional view of an embodiment of a coated fiber in a sheet configuration;
Figure 24 is a cross-sectional view of an embodiment of a macro fiber having a plurality of fiber bodies surrounded by matrix material;
Figure 25 is an end view of a plurality of the macro fibers of Figure 24 in a first state prior to the heating of the matrix material;
Figure 26 is an end view of a plurality of the macro fibers of Figure 24 in a second state following the heating of the matrix material and the intermingling of the matrix material;
Figure 27 is a cross-sectional view of a further embodiment of a macro fiber having a plurality of fiber bodies surrounded by matrix material and wherein the macro fiber has a parallelogram cross-sectional shape;
Figure 28 is a cross-sectional view of an alternative embodiment of the macro fiber wherein the matrix material in the macro fiber body corners is applied at an increased thickness;
Figure 29 is a cross-sectional view of an embodiment of a fiber body having notch regions for interlocking with other fiber bodies;
Figure 30 is a cross-sectional view of an embodiment of a macro fiber having a plurality of fiber bodies configured to provide in-plane interlocking with one another;
Figure 31 is a cross-sectional view of a further embodiment of a fiber body having notch regions for interlocking with other fiber bodies;
Figure 32 is a cross-sectional view of a further embodiment of a macro fiber having a plurality of fiber bodies of Figure 31 configured to provide in-plane interlocking and out-of-plane interlocking with other fiber bodies;
Figure 33 is a perspective illustration of a tri-component fiber comprising sacrificial material surrounding at least one coated fiber;
Figure 34 is a cross-sectional view of the tri-component fiber of Figure 33;
Figure 35 is a perspective illustration of the coated fiber of Figure 34 following removal of the sacrificial material;
Figure 36 is a cross-sectional view of the coated fiber;
Figure 37 is a cross-sectional view of a further embodiment of the tri-component fiber wherein the sacrificial material in the fiber body corners is applied at an increased thickness;
Figure 38 is a cross-sectional view of the coated fiber of Figure 37 following removal of the sacrificial material;
Figure 39 is a cross-sectional view of an embodiment of the tri-component fiber wherein the sacrificial material surrounds a macro fiber comprising a plurality of fiber bodies coated with matrix material;
Figure 40 is a cross-sectional view of the macro fiber of Figure 39 following the removal of the sacrificial material;
Figure 41 is a cross-sectional view of an embodiment of the tri-component fiber wherein the sacrificial material surrounds a plurality of macro fibers in a tape configuration;
Figure 42 is a cross-sectional view of the macro fiber of Figure 41 following the removal of the sacrificial material and illustrating a plurality of individual macro fibers in the tape configuration;
Figure 43 is a flow chart of an embodiment of a method of forming a coated fiber;
Figure 44 is a flow chart of an embodiment of a method of forming a composite article;
Figure 45 is a flow chart illustrating an embodiment of a method of using the composite article; and
Figure 46 is a perspective illustration of an aircraft which may incorporate the composite article in one or more embodiments.

### DETAILED DESCRIPTION

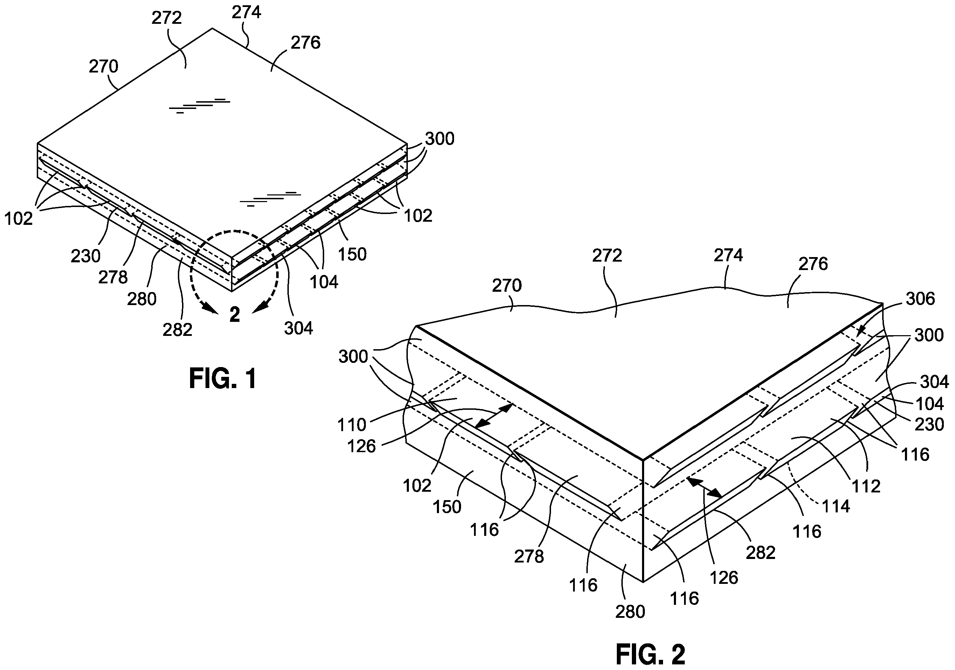

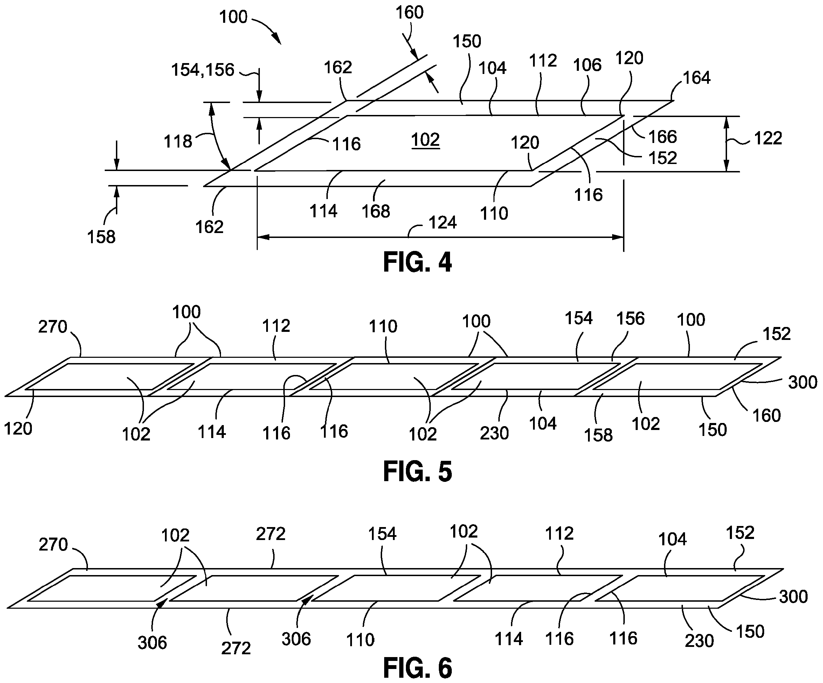

Referring now to the drawings wherein the showings are for purposes of illustrating preferred and various embodiments of the disclosure, shown in Figure 1 is a composite article 270 configured as a composite panel 274. The composite article 270 may be formed using a plurality of coated fibers 100 (Figure 4). Each one of the coated fibers 100 may comprise a fiber body 102 having a matrix material 150 applied to the fiber body 102 during formation of the fiber body 102. Advantageously, by co-forming the fiber body 102 and the surrounding matrix material 150, the time, expense, and complexity associated with the separate application of resin may be reduced. Furthermore, co-forming the fiber body 102 with the surrounding matrix material 150 may provide a means for more precisely controlling the dimensions and cross-sectional shape of fiber bodies 102 by minimizing the rounding of surface features that may be caused by surface energy effects as described in greater detail below.

Advantageously, the increased control of the dimensions and shape of the fiber bodies 102 may result in more precise control of the final dimensions (e.g., thickness) of the composite article 270 which may result in improved optical performance and/or improved ballistic performance of the composite article 270. The matrix material 150 may be applied to the fiber body 102 with a precisely controlled matrix thickness 154 (Figure 4). Control of the relative dimensions of the matrix thickness 154 and control of the fiber body cross-sectional area 106 (Figure 4) may provide a more accurate means for forming composite articles 270 with a specific fiber volume fraction 282. The matrix material 150 may be selected based upon processability, optical properties, mechanical properties, durability, moisture resistance, and other properties of the matrix material 150. The fiber material may be selected based upon mechanical performance and optical properties as described in greater detail below. The fiber body 102 may be formed in one or more specific cross-sectional shapes 104 that may be optimized based on the desired global properties of the composite article 270.

In Figure 1, the composite article 270 is illustrated as a composite panel 274 having generally planar panel surfaces 276. However, the composite article 270 may be formed in any one of a wide variety of sizes, shapes, and configurations, without limitation, and may include planar surfaces and/or compound curvature surfaces. In an embodiment, the composite article 270 may be fabricated as a substantially optically transparent composite panel 274 wherein the matrix material 150 may comprise a substantially transparent polymeric matrix and the fiber bodies 102 may comprise substantially transparent fibers. However, the composite article 270 may be formed as an opaque or substantially non-transparent composite article 270.

Referring to Figure 2, shown is a portion of the composite article 270 illustrating a plurality of fiber bodies 102 arranged in a cross-ply configuration 304 within the matrix material 150. The fiber bodies 102 are shown as having a parallelogram 230 cross-sectional shape 104. However, the fiber bodies 102 may be formed in any one of a variety of different cross-sectional shapes 104 as described below. The fiber bodies 102 may be formed having a specific cross-sectional area 106 (Figure 4) relative to a matrix cross-sectional area 168 (Figure 4). The total fiber volume 278 and the total matrix volume 280 may be controlled to within a relatively tight tolerance which may result in a relatively high degree of control of the desired fiber volume fraction 282 of the composite article 270.

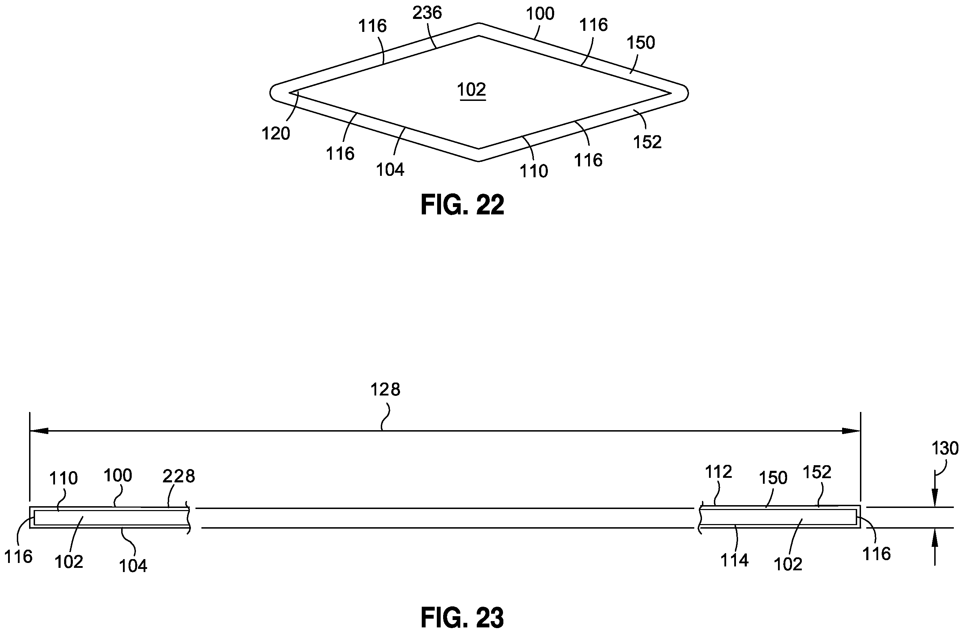

In addition, the fiber bodies 102 may be stretched lengthwise along a direction of fiber stretching 126 shown in Figure 2. One or more of the fiber bodies 102 may also be formed as a sheet 228 as shown in Figure 23 and described in greater detail below. The sheet 228 may be unidirectionally stretched along a single direction. Alternatively, the sheet 228 may be bidirectionally stretched along two directions that may be oriented generally perpendicular to one another. Regardless of the cross-sectional shape, the fiber bodies 102 may be stretched before or during application of the matrix material 150. Stretching of the fiber bodies 102 may increase the strength of the fiber bodies 102 relative to the strength of non-stretched fibers of the same material type. For example, the fiber bodies 102 may be formed of polymeric material such as polyamide. The polyamide may be intentionally stretched during formation of the fiber body 102 or after formation of the fiber body. The stretching of the fiber body 102 may cause the fiber molecules to become substantially aligned which may increase the tensile strength and stiffness of the fiber body 102. When embedded within the solidified or cured matrix material 150 of a composite article 270, stretched fiber bodies 102 may improve the specific performance of the composite article 270.

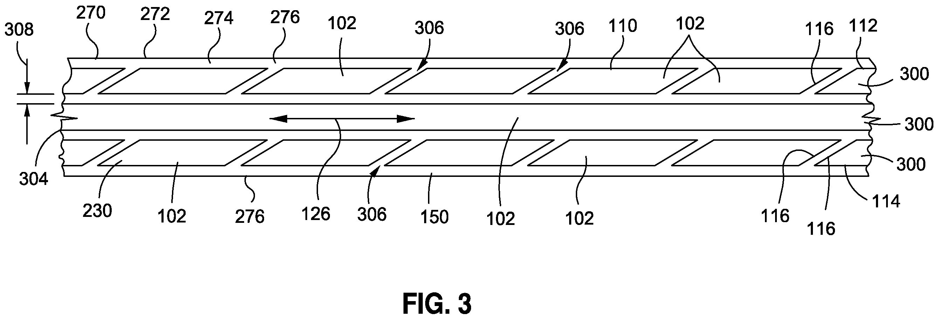

Figure 3 is a cross-sectional view of a composite article 270 formed from a plurality of coated fibers 100 (Figure 4). Each one of the coated fibers 100 may be comprised of the fiber body 102 co-formed with the matrix layer 152 (Figure 4). The fiber bodies 102 may each have fiber body side surfaces 116 that may be oriented in non-perpendicular relation to a fiber body upper surface 112 and/or a fiber body lower surface 114. In the embodiment shown, the fiber bodies 102 may be mounted in side-by-side arrangement and in relatively close proximity to one another to minimize the size of the gaps 306 between the fiber body side surfaces 116 of adjacent fiber bodies 102. By applying the matrix layer 152 to each fiber body 102 during formation thereof, the fiber body cross-sectional shape 104 (Figure 1) may be more precisely controlled to provide relatively straight or planar fiber body side surfaces 116 and relatively straight or planar fiber body upper and lower surfaces 112, 114. The improved dimensional control of the fiber body cross-sectional shape 104 may reduce optical distortions otherwise caused by diffractive and refractive effects resulting from rounded or non-planar surfaces and corners of the fiber bodies 102.

In addition, improved dimensional control of the fiber body cross-sectional shape 104 (Figure 1) may allow the fiber bodies 102 to be positioned in relatively close proximity to one another to minimize the size of the gaps 306 between the fiber bodies 102. Minimizing the gap 306 size between the fiber body side surfaces 116 may minimize optical distortion from phase differences (not shown) in light passing through the fiber bodies 102 relative to light passing through gaps 306 between adjacent fiber bodies 102. The improved dimensional control of the fiber bodies 102 may also improve the ability to control of the size of the gaps 308 between the fiber body upper and lower surfaces 112, 114 of fiber bodies 102 in adjacent layers 300. The effect of more precise control of the gaps 306, 308 between fiber bodies 102 may be a more precise control of the fiber volume fraction 282 (Figure 2) of the composite article 270. An increase in fiber volume fraction 282 may result in an increase in the specific performance of the composite article 270.

Figure 4 shows a cross section of a coated fiber 100 comprising a fiber body 102 surrounded by a matrix layer 152. The matrix layer 152 may be applied to the fiber body surfaces 110 in a substantially uniform thickness. However, the matrix layer 152 may be applied in different thicknesses at different locations of the cross-sectional shape as described below. In the embodiment shown, the fiber body 102 has a parallelogram 230 (Figure 5) shape including a fiber body upper surface 112, a fiber body lower surface 114, and a pair of fiber body side surfaces 116 oriented at a non-perpendicular angle 118 relative to the fiber body upper surface 112 and lower surface 114. However, the fiber body side surfaces 116 may be oriented perpendicularly relative to the fiber body upper surface 112 and/or the fiber body lower surface 114. Although the fiber body upper and lower surfaces 112, 114 and the fiber body side surfaces 116 are shown as being substantially planar, the fiber body upper and lower surfaces 112, 114 and/or the fiber body side surfaces 116 may be slightly curved including slightly concave or slightly convex and are not limited to a strictly substantially planar or flat profile.

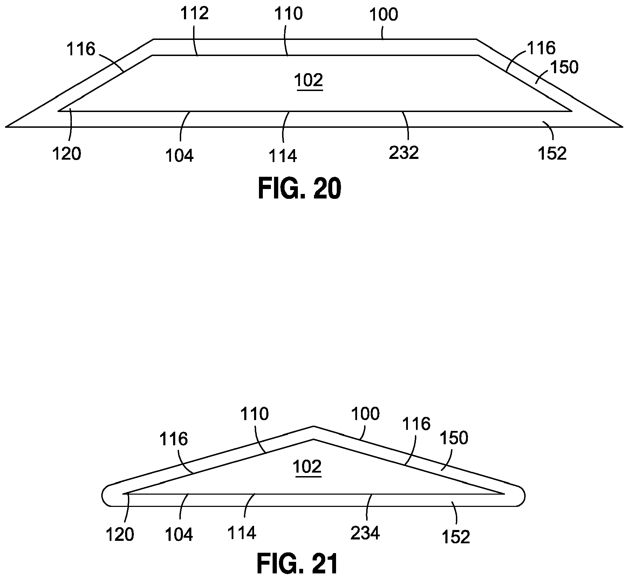

The fiber body 102 has a fiber body width 124 and a fiber body thickness 122. The fiber body thickness 122 may be in the range of from approximately three (3) microns to approximately 5,000 microns. However, the fiber body 102 may be provided in any fiber body width 124 or fiber body thickness 122, without limitation. The fiber body 102 has a generally elongated cross-sectional shape which is preferably formed at a relatively high aspect ratio to minimize the quantity of gaps 306 between fiber body side surfaces 116 in a layer 300 (Figure 3) . The fiber body 102 aspect ratio may be defined as the ratio of the fiber body width 124 to the fiber body thickness 122. In an embodiment, the aspect ratio may be within the range of from approximately 3 to approximately 500 although the fiber body 102 may be formed in any aspect ratio. Although Figure 4 shows the fiber body 102 in the parallelogram 230 shape (Figure 5), the fiber body 102 may be provided in any one of a variety of alternative shapes and configurations, without limitation. For example, the fiber body 102 may be provided in a trapezoidal shape 232 (Figure 21), a triangular shape 234 (Figure 21), a diamond shape 236 (Figure 21) as described below, or in other shapes and sizes.

Figure 5 is an end view of a plurality of the coated fibers 100 arranged in a layer 300 such as on a forming tool (not shown) that may approximate the final shape of a composite article 270. The coated fibers 100 are shown in a first state prior to heating of the matrix material 150 to cause intermingling of the matrix material 150. Although a single layer 300 is shown, multiple layers 300 of the coated fibers 100 may be provided. The layers 300 of coated fibers 100 may be positioned in the desired orientations to achieve the desired strength properties of the composite article 270. In the embodiment shown, the coated fibers 100 are mounted in side-by-side arrangement and in relatively close proximity to one another or in intimate contact with one another to minimize the size of the gaps 306 between the side surfaces 116. Minimizing the size of the gaps 306 between the side surfaces 116 may improve the optical performance of the composite article 270 as described above. In addition, the specific strength properties of the composite article 270 may be improved by increasing the fiber volume fraction 282 (Figure 2). Ballistic performance may also be improved due to the relatively close proximity of the side surfaces 116 which may reduce penetration of the composite article 270 by a projectile.

Figure 6 is an end view of the fiber bodies 102 in a second state after the matrix material 150 has been heated causing a reduction in the viscosity of the matrix material 150 and resulting in the intermingling of the matrix material 150 of adjacent coated fibers 100 in the same layer 300 and/or in different layers 300. Pressure may also be applied to the coated fibers 100 (Figure 4) during heating of the matrix material 150 for consolidation of the layers 300. The application of heat and/or pressure may be performed during one or more processing techniques including vacuum bag molding, autoclave molding, and other composite processing techniques.

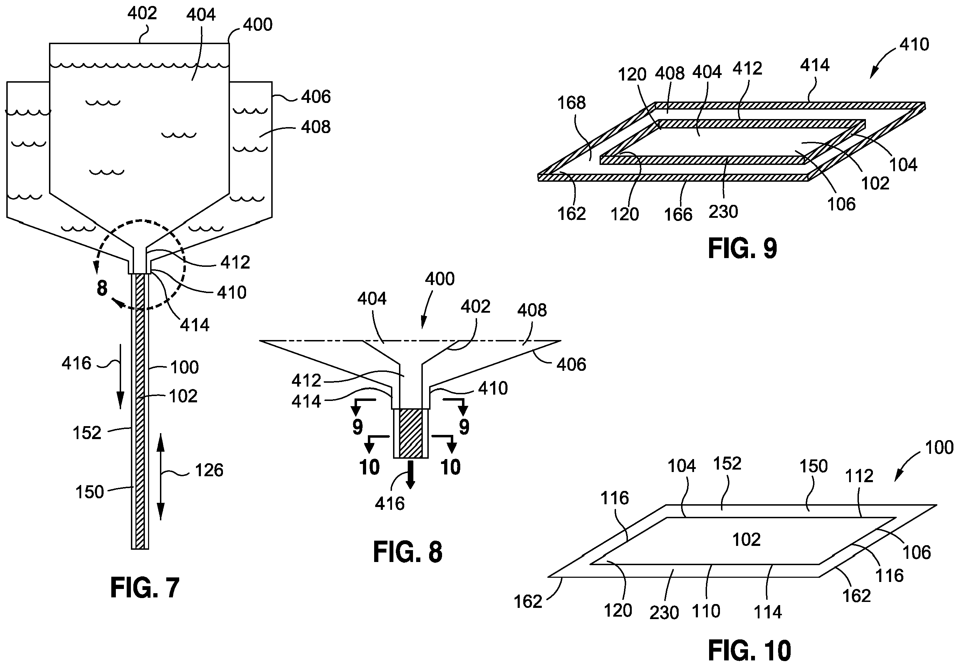

Figures 7-8 are schematic illustrations of an embodiment of a fiber-matrix forming apparatus 400 for forming coated fibers 100 wherein matrix material 408 at a relatively low viscosity may be applied to one or more fiber bodies 102 substantially simultaneous with the forming of the fiber bodies 102. The fiber-matrix forming apparatus 400 may include a fiber material reservoir 402 and a matrix material reservoir 406 for respectively containing fiber material 404 and matrix material 408. The fiber material 404 and/or the matrix material 408 may be comprised of polymeric material which may be a thermoplastic material or a thermosetting material. The fiber material 404 and the matrix material 408 may be drawn, extruded, spun, or otherwise produced by a suitable fiber-matrix forming apparatus 400 to form a coated fiber 100.

In Figures 7-8, the fiber material 404 and matrix material 408 may be at a relatively high temperature and/or relatively low viscosity at the nozzle of the fiber-matrix forming apparatus 400 which may allow the fiber material 404 and matrix material 408 to be extruded or drawn through the nozzle into the shape of the coated fiber 100. The coated fiber 100 may be drawn from the nozzle 410 along a fiber forming direction 416. As the coated fiber 100 is formed and the matrix layer 152 is applied, the fiber body 102 may be stretched along a fiber stretching direction 126 (e.g., along the length of the fiber body 102). The coated fiber 100 may cool as the coated fiber 100 is drawn away from the nozzle 410. However, the fiber body 102 may be stretched after the coated fiber 100 is formed instead of stretching the fiber body 102 during formation.

In this regard, a coated fiber 100 may be processed in a fiber stretching apparatus (not shown) which may reduce the fiber body size (not shown) and which may extend the length of the coated fiber 100 and the fiber body 102 contained therewithin. For example, a coated fiber 100 may be rolled onto a spool (not shown) and then stretched using a fiber stretching apparatus (not shown). However, the fiber body 102 may be stretched using alternative techniques and is not limited to stretching during formation of the coated fiber 100 or stretching after formation of the coated fiber 100. The fiber-matrix forming apparatus 400 shown in Figures 7-8 is a nonlimiting example of a system that may be implemented for forming coated fibers 100 and is not to be construed as limiting alternative arrangements for co-forming one or more fiber bodies 102 with matrix material 150.

In Figures 7-8, the matrix layer 152 may be applied to the fiber body 102 at a matrix application rate that may be controlled based on the rate at which the fiber body 102 is drawn or extruded from the fiber-matrix forming apparatus 400. In an embodiment, the matrix layer 152 may be applied at a rate such that the desired matrix thickness 154 (Figure 4) is applied in a substantially uniform manner along a length of the fiber body 102. Although not shown, the fiber-matrix forming apparatus 400 may include feedback data regarding fiber draw rate, fiber temperature, matrix temperature, fiber stretching ratio, ambient temperature, relative humidity, and other data that may facilitate precise control of the fiber body 102 and matrix layer 152 formation process.

Figure 9 is a cross section of an embodiment of the nozzle 410 from which the coated fiber 100 (Figure 4) may be drawn, extruded, or otherwise formed. The nozzle 410 may include a fiber body die 412 that may be sized and configured to form the fiber body 102 in the desired fiber body cross-sectional shape 104. The nozzle 410 may also include a matrix layer die 414 which may be annularly positioned around the fiber body die 412. The matrix layer die 414 may be sized and configured to form the matrix layer 152 (Figure 7) in a desired matrix cross-sectional shape 166 around the fiber body 102 as the fiber body 102 is formed.

Referring to Figure 10, shown is a coated fiber 100 produced by co-forming the fiber body 102 with a surrounding matrix layer 152 (Figure 7). Advantageously, the time, expense, and complexity associated with the conventional application of resin to a plurality of fibers in a separate step may be reduced. In addition, by applying the matrix layer 152 to the fiber body 102 as the fiber body 102 is formed, the fiber body cross-sectional shape 104 may be more accurately produced. For example, for the parallelogram 230 coated fiber 100 shown in Figure 10, the fiber body 102 may be produced such that the fiber body upper surface 112, the fiber body lower surface 114, and the fiber body side surfaces 116 are formed substantially planar and remain substantially planar as the fiber body 102 is drawn from the fiber body die 412 (Figure 7) and the fiber body 102 cools.

In addition, the fiber body corners 120 may be maintained in a relatively sharp or non-rounded shape due to the matrix layer 152 having a shape that is substantially similar to the fiber body 102. The effect of the matrix layer 152 and the fiber body 102 having a substantially similar shape is a reduction in surface-energy-driven rounding of the fiber body 102 such as at the fiber body corners 120. By embedding the fiber body 102 in the matrix layer 152, surface energy effects on the fiber body 102 may be alleviated. Surface energy effects may be highest when the fiber body 102 material is at a relatively high temperature and/or a relatively low viscosity as the fiber body 102 is initially drawn from the nozzle 410. Advantageously, by applying the matrix layer 152 to the fiber body 102 as the fiber body 102 is drawn, surface energy effects on the fiber body 102 may be substantially reduced or alleviated.

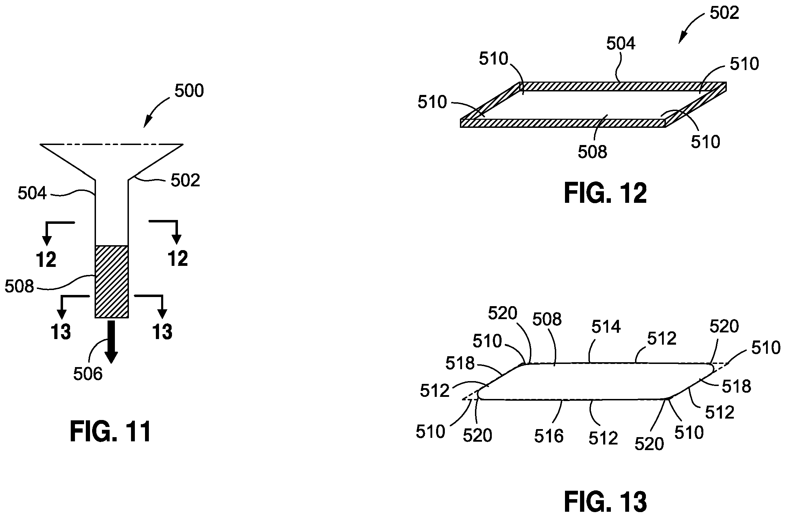

Referring to Figure 11, shown is a schematic view of a nozzle 502 of a fiber-forming apparatus 500 illustrating the forming of fibers 508 without the application of matrix material 150. The fiber-forming apparatus 500 may include a fiber material reservoir (not shown) containing fiber material (not shown). A fiber 508 may be drawn from a fiber die 504 at a nozzle 502. The fiber 508 may be drawn along a fiber drawing direction 506.

Figure 12 illustrates a cross section of the nozzle 502 and the parallelogram 230 shape (Figure 5) of the fiber die 504. The fiber die 504 has relatively sharp or non-rounded interior corners. Figure 13 is an illustration of a cross section of a fiber 508 that may be extruded or drawn from the fiber die 504 (Figure 11) along the fiber drawing direction 506 (Figure 11). The cross-sectional shape of the fiber 508 in Figure 13 has rounded upper and lower surfaces 514, 516 and rounded side surfaces 518 as a result of the surface energy effects 512. The surface energy rounding of the upper and lower surfaces 514, 516 and the side surfaces 518 may occur when the fiber 508 first comes out of the nozzle 410 (Figure 7) prior to cooling of the fiber 508 and when the fiber 508 has a relatively low viscosity and a relatively high temperature. Surface energy rounding may be more pronounced at the corners 520 (Figure 13) of the fiber 508. Such rounded corners 520 may result in reduced optical performance of a composite article due to refractive and diffractive optical distortions that may occur due to differences in the refractive index of the fibers 508 and a matrix (not shown) within which the fibers 508 may be embedded in a composite article. As may be appreciated, the coated fiber 100 (Figure 10) described in the present disclosure may advantageously avoid the occurrence of such rounded surfaces and/or rounded corners as may otherwise occur when fibers 508 are formed without a surrounding matrix layer.

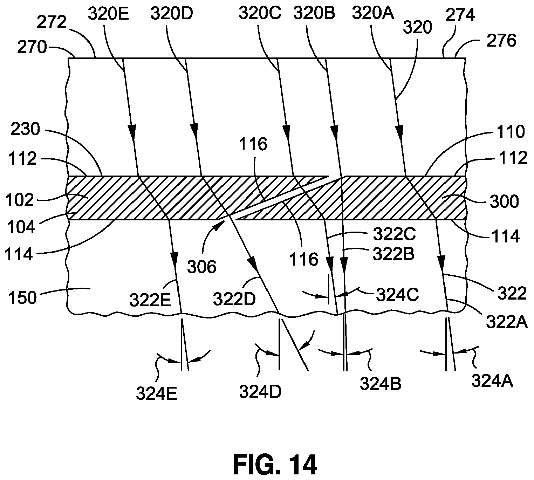

Figure 14 is a sectional view of a composite article 270 constructed using coated fibers 100 (Figure 10) and illustrating a pair of fiber bodies 102 located in relatively close proximity to one another. The fiber bodies 102 advantageously have a fiber body cross-sectional shape 104 having relatively flat or planar fiber body upper and lower surfaces 112, 114 and fiber body side surfaces 116. In addition, the fiber body corners 120 (Figure 10) are relatively sharp and non-rounded. Figure 14 further illustrates a plurality of light rays 320 passing through the composite article 270. The resultant angles 324 and path lengths 322 of the light rays 320 may differ slightly depending on whether the light rays 320 pass through the main portion of the fiber body 102 or whether the light rays 320 pass through one or more of the side surfaces 116 of the fiber bodies 102. For example, a first light ray 320A may pass from the matrix material 150 into the fiber body 102 and then exit the fiber body 102 and pass back into the matrix material 150 resulting in a lateral displacement of the first light ray 320A due to differences in refractive index of the matrix material 150 relative to the refractive index of the fiber body 102. A fifth light ray 320E may pass from the matrix material 150 into the fiber body 102 and then may exit the fiber body 102 such that the fifth light ray 320E may be oriented at a resultant angle 324E that may be substantially equivalent to the resultant angle 324A of the first light ray 320A after the first light ray 320A exits the fiber body 102. In addition, the fifth path length 322E may be substantially equivalent to the first path length 322A.

Figure 14 also illustrates a third light ray 320C which may pass through the matrix material 150 and enter a fiber body side surface 116 of one of the fiber bodies 102 and then cross the gap 306 and enter the fiber body side surface 116 of the adjacent fiber body 102 prior to exiting the fiber body 102 and entering the matrix material 150. Due to the substantially planar shape of the fiber body side surface 116, the third light ray 320C may exit the fiber body 102 at a resultant angle 324C that is substantially equivalent to the resultant angle 324A, 324E of the first light ray 320A and fifth light ray 320E. In addition, the third path length 322C may be substantially equivalent to the first path length 322A and to the fifth path length 322E.

In Figure 14, the second and fourth light rays 320B, 320D are incident upon one of the fiber body side surfaces 116 of one of the fiber bodies 102 which results in the second and fourth light ray 320B, 320D exiting the fiber bodies 102 at resultant angles 324B and 324D that are different than the resultant angle 324A, 324C, 324E of the first, third, and fifth light ray 320A, 320C, 320E. In addition, the second and fourth light ray 320B, 320D may have longer optical path lengths 322B, 322D than the first, third and fifth path lengths 322A, 322C, 322E as a result of the second and fourth light ray 320B, 320D passing through a single one of the fiber body side surfaces 116. Although differences in resultant angles 324 and optical path length 322 generally results in optical distortion, in the arrangement of Figure 14, the amount of light passing through only one fiber body side surface 116 may be kept relatively small by minimizing the size of the gaps 306 and by minimizing the quantity of gaps 306 in each layer 300 such that optical distortion is minimized. In addition, differences in resultant angles 324 and optical path lengths 322 for light rays 320 passing through different fiber bodies 102 may be minimized by more precisely controlling the fiber body thickness 122 (Figure 4) during the co-forming of the fiber body 102 and the matrix layer 152 (Figure 7).

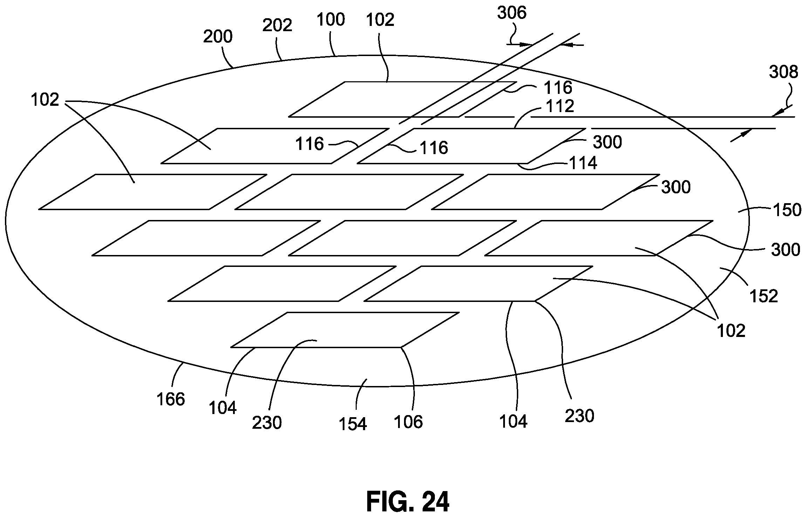

Advantageously, by controlling the shape of the fiber body side surfaces 116 by applying the matrix layer 152 (Figure 7) to prevent surface rounding and corner rounding, optical distortion in the composite article 270 may be minimized. In addition, by minimizing the size of the gaps 306 between the fiber body side surfaces 116 of adjacent fiber bodies 102 in a layer 300, the differences in angular deviations in the resultant angles 324 and the differences in the optical path lengths 322 through a composite article 270 may be minimized. For example, the present disclosure includes an embodiment described below wherein a plurality of the fiber bodies 102 may be simultaneously produced (e.g., drawn, extruded, etc.) with a simultaneously applied matrix material 150 surrounding the fiber bodies 102 to form a macro fiber 200 (Figure 24). The relative size, spacing, and alignment of the fiber bodies 102 in the macro fiber 200 may be accurately controlled which may result in a relatively high degree of alignment between fiber bodies 102 (Figure 3) within a composite article 270 (Figure 3) and a relatively high degree of precision in the size of the gaps 306, 308 (Figure 3) between the fiber bodies 102.

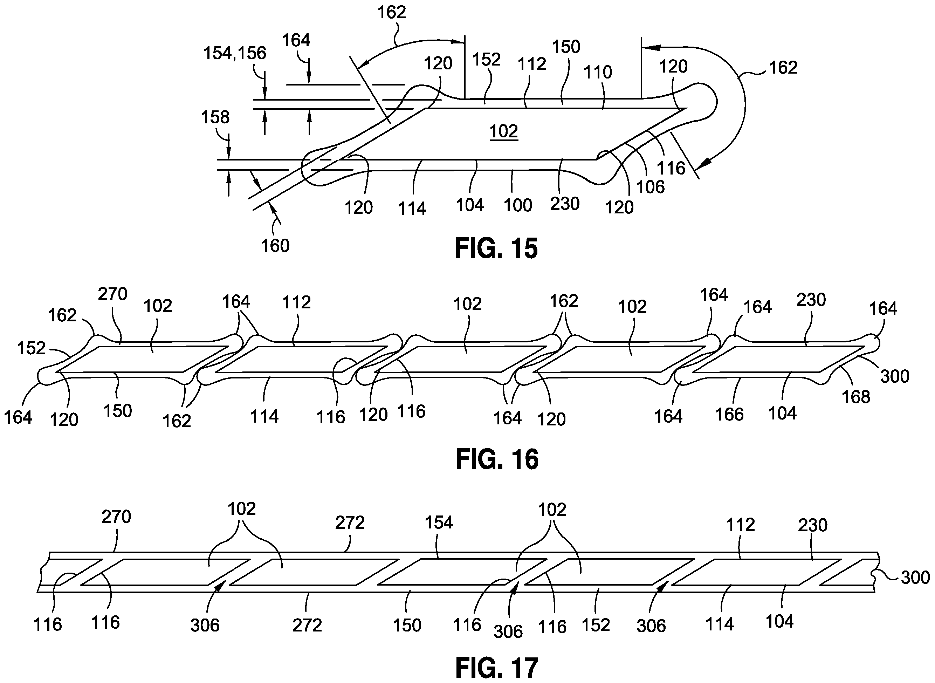

Figure 15 shows a coated fiber 100 wherein the matrix layer 152 has a matrix thickness 154 that is different at different locations of the fiber body cross-sectional shape 104. For example, the matrix layer 152 in the corner regions 162 of the fiber body 102 has an increased thickness relative to the upper or lower surface matrix thickness 156, 158 along the planar fiber body upper and lower surfaces 112, 114. In an embodiment, the corner region matrix thickness 164 may be greater than the upper or lower surface matrix thickness 156, 158 by at least approximately 10 percent although the corner region matrix thickness 164 may be greater than the surface matrix thickness 156, 158 by less than approximately 10 percent. The corner region matrix thickness 164 may be measured along the same direction (e.g., perpendicular to the surfaces 112, 114, 116) as the direction of measurement of the upper surface, lower surface, or side surface matrix thickness 156, 158, 160.

The increase in the corner region matrix thickness 164 may reduce surface-energy-driven rounding of the matrix layer 152 at the corner regions 162. In this regard, by providing the matrix layer 152 with the corner region matrix thickness 164 having a more rounded shape relative to the generally sharp corner of the matrix layer of Figure 4, the matrix layer 152 at the corner regions may be less susceptible to rounding due to surface energy effect. Reducing the surface energy rounding of the matrix layer 152 at the corner regions 162 may reduce the surface-energy-driven rounding of the fiber body corner 120. Although the coated fiber 100 in Figure 14 includes an increased corner region matrix thickness 164 relative to the coated fiber 100 of Figure 4, the total cross-sectional area of the matrix layer 152 for the coated fiber 100 in Figure 14 may be provided in an amount such that a desired fiber volume fraction 282 (Figure 2) is achieved in the composite article 270.

Figure 16 is an end view of a plurality of the coated fibers 100 (Figure 10) having increased corner region matrix thicknesses 164 relative to the upper surface, lower surface, or side surface matrix thicknesses 156, 158, 160 (Figure 15). The coated fibers 100 may be positioned in contacting relation with one another.

Figure 17 shows the fiber bodies 102 in a second state following heating and intermingling of the matrix material 150 of the different coated fibers 100. Pressure may be applied simultaneous with the heating of the matrix material 150 to aid in the consolidation of multiple layers 300 of the composite article 270. Heat and/or pressure may be applied and the matrix material 150 may then be cured or solidified to form the composite article 270.

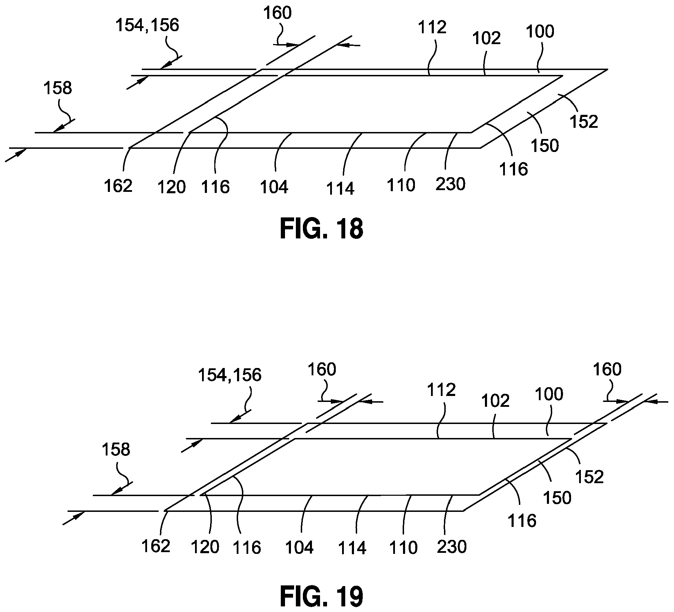

Figures 18-19 are further embodiments of the coated fiber 100 wherein the matrix layer 152 has a matrix thickness 154 that is different at different locations of the fiber body cross-sectional shape 104. For example, Figure 18 illustrates an embodiment of the coated fiber 100 wherein the side surface matrix thicknesses 154 are substantially equivalent and wherein the upper surface matrix thickness 156 is less than the lower surface matrix thickness 158. Figure 19 illustrates an embodiment of the coated fiber 100 wherein the side surface matrix thicknesses 160 are each less than the upper and lower surface matrix thickness 156, 158.

Figures 20-22 illustrate alternative shapes of the coated fiber 100. Figure 20 illustrates a trapezoidal 232 shape of the coated fiber 100 having substantially planar fiber body upper and lower surfaces 112, 114 that are substantially parallel to one another. The fiber body side surfaces 116 are oriented in non-parallel relation to one another. The trapezoidal 232 cross-sectional shape of the fiber body 102 in Figure 20 may be provided in a relatively high aspect ratio which may result in improved optical performance for the composite article 270 (Figure 1).

Figure 21 illustrates a triangular 234 shape of the coated fiber 100 having a fiber body 102 with a fiber body lower surface 114 and a pair of fiber body side surfaces 116. The aspect ratio of the triangular 234 fiber body 102 is preferably large to minimize optical distortions. The triangular 234 fiber body 102 may facilitate registration or alignment of the fiber bodies 102 relative to one another when laying up a composite article 270 (Figure 1). For example, a layer 300 (not shown) of the triangular 234 fiber bodies 102 may be arranged in an upright orientation and in side-by-side relation to one another. A layer 300 of inverted (not shown) triangular 234 fiber bodies 102 may then be nested between the upright triangular 234 fiber bodies 102 to form one or more double layers (not shown) of fiber bodies 102. The matrix material 150 may be heated and cured or solidified to form the composite article 270.

Figure 22 illustrates a diamond 236 cross-sectional shape 104 of the coated fiber 100 and fiber body 102 having two pairs of fiber body side surfaces 116. A plurality of the diamond 236 fiber bodies 102 may be arranged in layers 300 (not shown). The fiber bodies 102 may be positioned such that the fiber body side surfaces 116 are in relatively close proximity to one another to improve optical performance and/or increase the fiber volume fraction 282 (Figure 1) of a composite article 270 (Figure 1).

Figure 23 shows an embodiment of a coated fiber 100 and fiber body 102 in a sheet 228 cross-sectional shape 104. The sheet 228 may be formed in a relatively high aspect ratio of coated fiber width 128 to coated fiber thickness 130. In an embodiment, the sheet 228 may have an aspect ratio of coated fiber width 128 to coated fiber thickness 130 of at least approximately 10. By forming the coated fiber 100 in a sheet 228 configuration, the total quantity of coated fibers 100 required to form a composite article 270 (Figure 1) may be reduced which may reduce the amount of time required to lay up the composite article 270.

Although the present disclosure illustrates fiber bodies 102 in the parallelogram 230 shape, trapezoidal 232 shape (Figure 20), triangular 234 shape (Figure 21), diamond 236 shape (Figure 22), and sheet 228 configuration, the fiber bodies 102 may be formed in any one of a variety of alternative shapes and configurations and are not limited to that which is illustrated in the figures. In an embodiment, the fiber bodies 102 may have fiber body side surfaces 116 that are oriented non-perpendicularly relative to the fiber body upper and/or lower surfaces 112, 114 (Figure 20) and/or non-perpendicularly to an article surface 272 (Figure 1) of a composite article 270 (Figure 1) to improve the optical performance of the composite article 270. However, the fiber bodies 102 may be provided in cross-sectional shapes having surfaces that are oriented perpendicularly relative to the surfaces of the composite article 270. For example, the fiber bodies 102 may be provided in a rectangular shape, a square shape, or in other shapes having side surfaces that are substantially perpendicular to one or more article surfaces 272. In addition, the fiber bodies 102 may have a fiber body cross-sectional shape 104 that is at least partially rounded. For example, fiber body cross-sectional shape 104 may include a circle, an oval, an ellipsoid, a closed semi-circle, a kidney shape, and other shapes.

Figure 24 shows an embodiment of a macro fiber 200 having a plurality of the fiber bodies 102 surrounded by matrix material 150. The macro fiber 200 may be formed by drawing or extruding a plurality of the fiber bodies 102 and simultaneously applying matrix material 150 to the fiber bodies 102. The macro fiber 200 may provide a means for controlling the relative size, spacing, and alignment of the fiber bodies 102 in the macro fiber 200 which may result in a relatively high degree of precision in aligning the fiber bodies 102 in a composite article 270 (Figure 17). In an embodiment, at least a portion of the fiber bodies 102 in the macro fiber 200 may be generally vertically and/or horizontally aligned with one another or the fiber bodies 102 may be uniformly staggered relative to one another. In the macro fiber 200, the fiber bodies 102 may be arranged in a plurality of layers 300 with gaps 308 between the fiber body upper and lower surfaces 112, 114. The fiber bodies 102 within each layer 300 may be positioned with relatively small gaps 306 between the fiber body side surfaces 116 to maximize the fiber volume fraction 282 of the composite article 270.

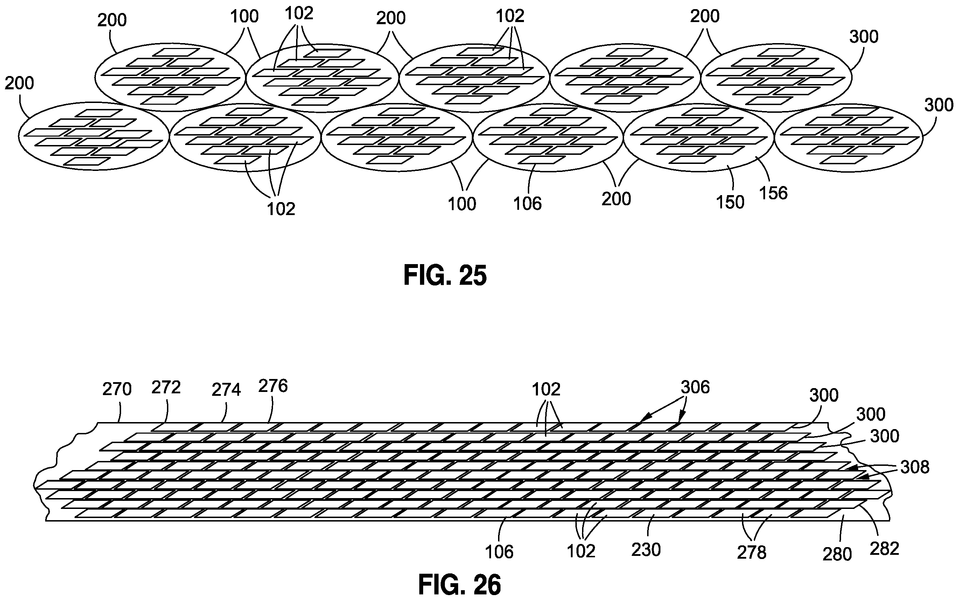

Figure 25 shows a plurality of the macro fibers 200 in a first state prior to the heating and intermingling of the matrix material 150. The macro fibers 200 may be arranged in one or more layers 300. Although the fiber bodies 102 in the layers 300 are shown as being oriented in the same direction, the fiber bodies 102 in one layer 300 may be oriented in a different direction that the fiber bodies 102 in at least one other layer 300.

Figure 26 shows the macro fibers 200 (Figure 25) in a second state following the heating of the matrix material 150 (Figure 25) which may result in a reduction in the viscosity of the matrix material 150 and which may facilitate the intermingling of the matrix material 150 of the different macro fibers 200. Advantageously, by forming the macro fiber 200 with a plurality of fiber bodies 102 at specific alignments and/or orientations, the alignment and orientation of the fiber bodies 102 within the final composite article 270 may be more precisely controlled which may improve the optical performance of the composite article 270.

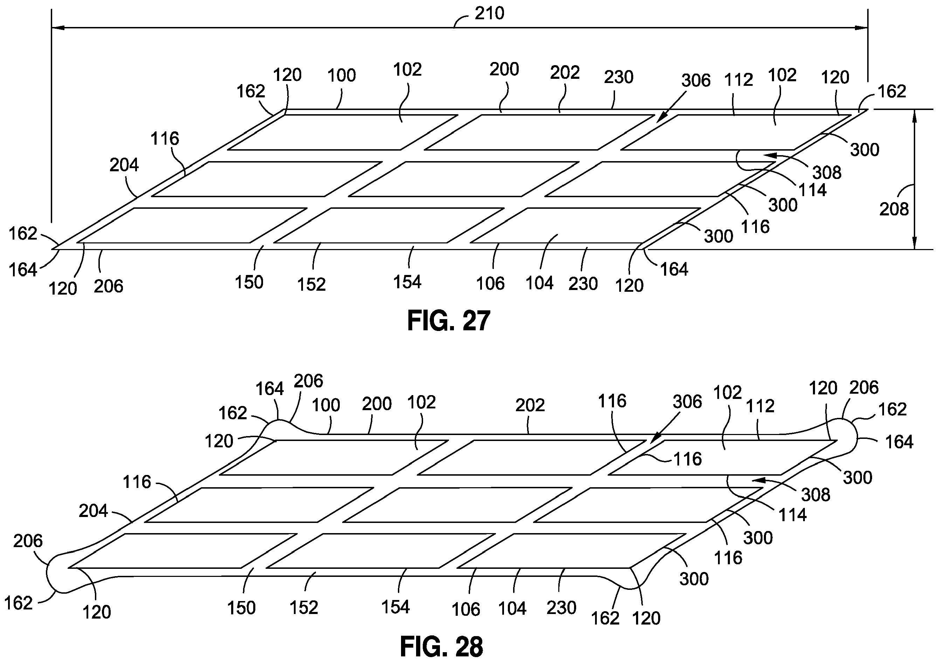

Figure 27 is an illustration of an embodiment of a macro fiber 200 having a parallelogram 230 macro fiber cross-sectional shape 202. The macro fiber 200 has a macro fiber thickness 208 and a macro fiber width 210. By providing the macro fiber 200 in a specific cross-sectional shape 202, the performance of the composite article 270 (Figure 1) may be improved. For example, the overlapping of the macro fiber side surfaces 204 may facilitate some degree of engagement of adjacent fiber bodies 102 during a ballistic event which may improve the collective energy-absorbing capability of the fiber bodies 102 in decelerating a projectile. The macro fiber 200 may be provided in any one of a variety of different cross-sectional shapes. For example, the macro fiber cross-sectional shape 202 may include a circle, an oval, an ellipsoid, a closed semi-circle, a kidney shape, a polygon, a triangle, a square, a rectangle, a diamond, a parallelogram, a trapezoid, or any one of a variety of other macro fiber cross-sectional shapes 202. The macro fiber 200 may also be provided in a cross-sectional area that provides a specific amount of matrix material 150 to achieve a desired fiber volume fraction 282 (Figure 1) of a composite article 270. In addition, the macro fiber 200 may be provided in an embodiment having a single layer (not shown) of side-by-side fiber bodies 102 in alignment with one another and surrounded by matrix material 150.

Shown in Figure 28 is an embodiment of the macro fiber 200 wherein the matrix material 150 at the macro fiber corners 206 has an increased thickness. The increased thickness of the macro fiber corners 206 may prevent the rounding of the fiber body corners 120 due to surface energy effects as mentioned above.

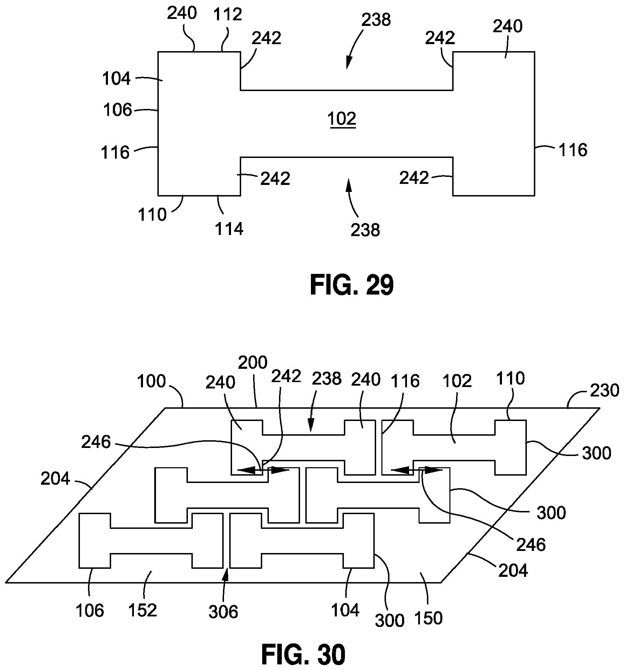

Figures 29-30 illustrate fiber bodies 102 having fiber body upper, lower, and side surfaces 112, 114, 116 and having notch regions 238 for nesting or interlocking with other fiber bodies 102. In the embodiment of Figure 29, the fiber body 102 is shown having notch regions 238 and one or more side regions 240 adjacent to the notch regions 238. The fiber body 102 in the notch region 238 may have a thickness that is less than the thickness in the side regions 240. The notch region 238 may be defined by notch sidewalls 242 which are shown as being oriented substantially perpendicular relative to a horizontal portion of the notch region 238.

Figure 30 illustrates a parallelogram 230 shaped macro fiber 200 having a plurality of fiber bodies 102 positioned in side-by-side relation and arranged in layers 300 within the macro fiber 200. The macro fiber 200 may be configured such that at least one of the fiber bodies 102 of at least one of the layers 300 may be received within the notch region 238 of at least one of the fiber bodies 102 of an adjacent one of the layers 300. The notch regions 238 may facilitate in-plane interlocking 246 of the fiber bodies 102 such that at least a portion of the fiber bodies 102 may be mechanically coupled to one. During a ballistic event, the mechanical coupling of the fiber bodies 102 may increase the quantity of fiber bodies 102 that may be involved in a ballistic event which may increase the energy-absorbing capability of the fiber bodies 102 and improve the capability of the composite article in decelerating a projectile.

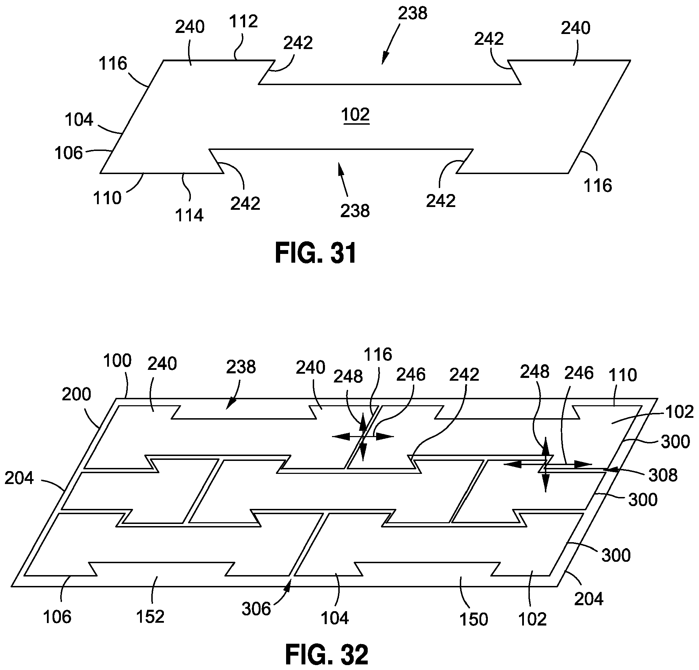

Figures 31-32 illustrate a further embodiment of fiber bodies 102 that have notch regions 238 defined by sidewalls that are oriented in non-perpendicular relation to at least one of the fiber body upper and lower surfaces 112, 114. The non-perpendicular orientation of the sidewalls may provide a combination of in-plane interlocking 246 (Figure 32) and out-of-plane interlocking 248 (Figure 32) with adjacent fiber bodies 102. The increased interlocking may increase the mechanical coupling of the fiber bodies 102 which may increase the energy-absorbing capability of the fiber bodies 102 during a ballistic event.

In any of the embodiments disclosed herein, the fiber bodies 102 may be formed of any suitable organic or inorganic polymeric material, without limitation, and including any thermoplastic material and any thermosetting material. For example, the fiber bodies 102 may be formed of a thermoplastic material comprising at least one of the following: acrylics, fluorocarbons, polyamides (nylons), polyethylenes, polyesters, polypropylenes, polycarbonates, polyurethanes, polyetheretherketone, polyetherketoneketone, polyetherimides, stretched polymers and any other suitable thermoplastic material. In addition, the fiber bodies 102 may be formed of a thermosetting material which may include any one of the following: polyurethanes, phenolics, polyimides, bismaleimides, polyesters, epoxies, silsesquioxanes and any other suitable thermosetting material. Furthermore, the fiber bodies 102 may be formed of an inorganic material including carbon, silicon carbide, boron, or other inorganic material. Even further, the fiber bodies 102 may be formed of a glass material comprising E-glass (alumino-borosilicate glass), S-glass (alumino silicate glass), pure silica, borosilicate glass, optical glass, and any other glass material, without limitation. In an embodiment, the fiber bodies 102 may be formed of a metallic material. For embodiments where the fiber bodies 102 are stretched, the fiber bodies 102 may be formed of a thermoplastic material.

In any of the embodiments disclosed herein, the matrix material 150 may comprise any suitable thermoplastic material or thermosetting material including, but not limited to, any of the above-mentioned thermoplastic or thermosetting materials from which the fiber bodies 102 may be formed. Furthermore, in any of the embodiments disclosed herein, the matrix material 150 may comprise any suitable metallic material and/or glass material. In an embodiment, the matrix material 150 and/or the fiber bodies 102 may be formed of a substantially optically transparent material. However, the matrix material 150 and/or the fiber bodies 102 may be formed of substantially opaque material or substantially non-transparent material. In addition, the matrix material 150 may be comprised of a polymeric material that is different than the polymeric material of the fiber body 102. However, the matrix material 150 and the fiber bodies 102 may be formed of substantially the same or similar polymeric material. The fiber bodies 102 may optionally have a higher molecular weight than the matrix material 150. The high molecular weight of the fiber bodies 102 may improve the strength properties and the ballistic performance of the composite article 270. The lower molecular weight of the matrix material 150 may allow the composite article 270 to be processed without affecting the desired shape and properties of the fiber bodies 102. By forming the matrix material 150 and the fiber bodies 102 from the same material, the matrix material 150 and the fiber bodies 102 material may have substantially equivalent indices of refraction and/or temperature coefficients of refractive index which may improve the optical performance of the composite article 270 relative to an arrangement where the matrix material 150 and the fiber bodies 102 are formed of different materials. In an embodiment, the fiber bodies 102 and/or the matrix material 150 may be formed of polyethylene such as ultra-high molecular weight polyethylene due to its favorably high modulus of elasticity.

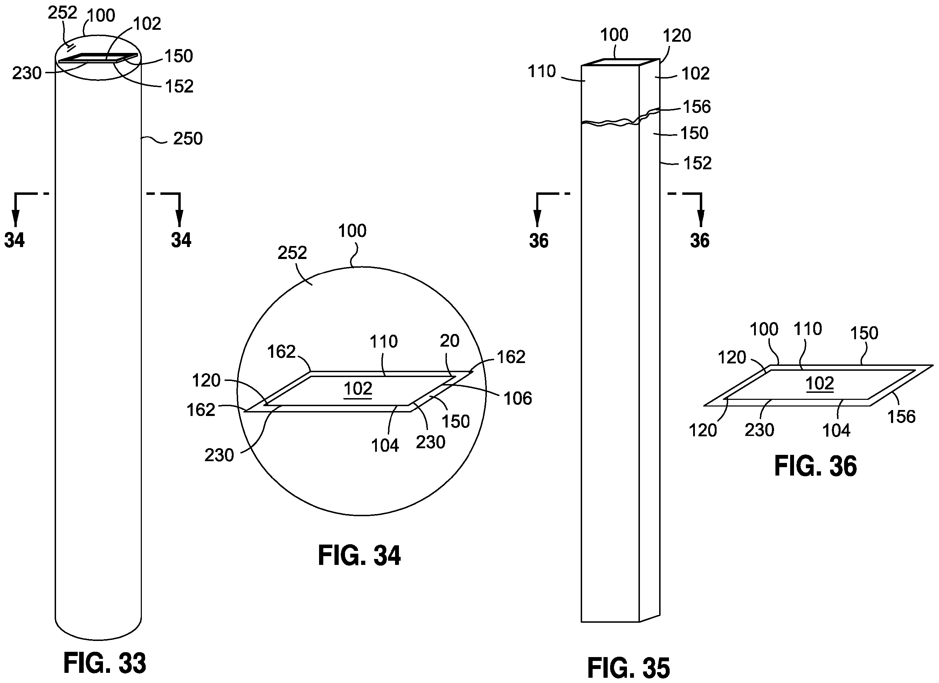

In Figures 33-36, shown is an embodiment of a coated fiber 100 implemented in a tri-component fiber 250 embodiment. The tri-component fiber 250 may comprise a sacrificial material 252 containing or surrounding at least one fiber body 102 coated with the matrix material 150. The sacrificial material 252 may be different than the material from which the fiber body 102 and/or the matrix material 150 are formed. Figure 33 is a perspective view of the tri-component fiber 250 having the sacrificial material 252 extending along a length thereof. Figure 34 is a cross-sectional view of the tri-component fiber 250 having a generally rounded or circular cross-sectional shape and illustrating the coated fiber 100 having a parallelogram 230 shape. In an embodiment, the sacrificial material 252 may be applied to the matrix layer 152 simultaneous with the formation of the fiber body 102 and the matrix layer 152.

Figure 35 is a perspective illustration of the coated fiber 100 after the sacrificial material 252 (Figure 33) is removed. The sacrificial material 252 may comprise a generally dissolvable material which may be washed away or otherwise removed after formation of the coated fiber 100. In an embodiment, the sacrificial material 252 may be dissolvable in water or in a solvent or the sacrificial material 252 may be removed by other chemical means or by mechanical means. Advantageously, the sacrificial material 252 may improve the dimensional control of the fiber body 102 during formation by minimizing rounding of the fiber body surfaces and corner and preventing other distortions of the fiber body 102 during processing. Figure 36 illustrates a parallelogram 230 cross-sectional shape of the coated fiber 100. However, the coated fiber 100 may be formed as a tri-component fiber 250 (Figure 33) in any shape or configuration, without limitation. Although the sacrificial material 252 is shown as having a generally rounded shape for ease of manufacturing, the sacrificial material 252 may be provided in other shapes.

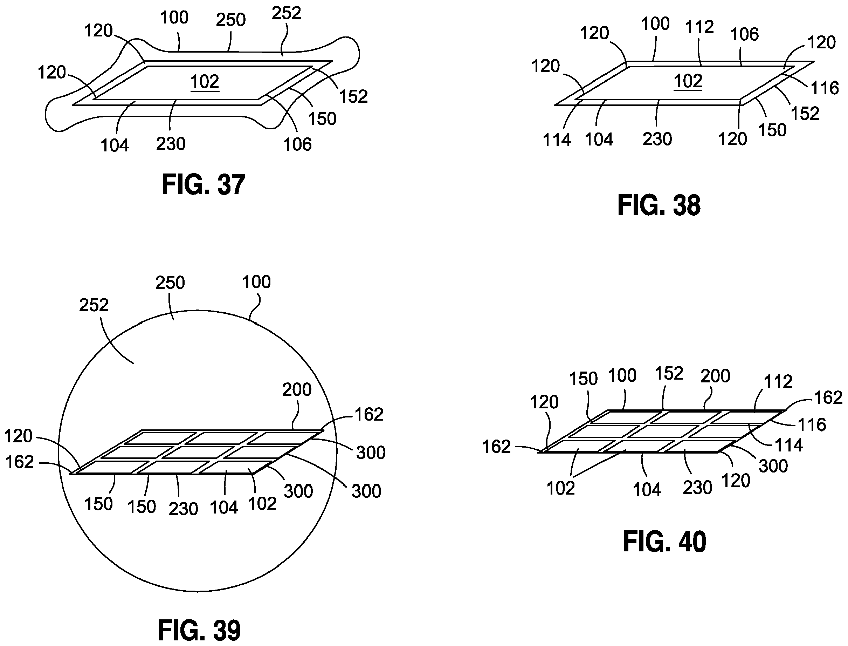

Figure 37 is a cross-sectional view of a tri-component fiber 250 having a shape that approximates the cross-sectional shape of the coated fiber 100. In addition, the tri-component fiber 250 has an increased thickness of sacrificial material 252 at the fiber body corners 120. The embodiment shown may reduce the amount of material that is dissolved or washed away which may conserve material and reduce cost. The increased thickness of the sacrificial material 252 (Figure 33) at the fiber body corners 120 may reduce surface energy distortions as discussed above. Figure 38 is a cross-sectional view of the coated fiber 100 after removal of the sacrificial material 252.

Figure 39 is a cross-sectional view of a tri-component fiber 250 having multiple fiber bodies 102 surrounded by matrix material 150 and which is similar to the macro fiber 200 embodiment illustrated in Figure 27. The sacrificial material 252 of the tri-component fiber 250 of Figure 39 may preserve the fiber body 102 geometry and maintain the alignment of the fiber bodies 102 which may result in improved alignment of the fiber bodies 102 in a composite article 270. Figure 40 is a cross-sectional view of the macro fiber 200 after removal of the sacrificial material 252.

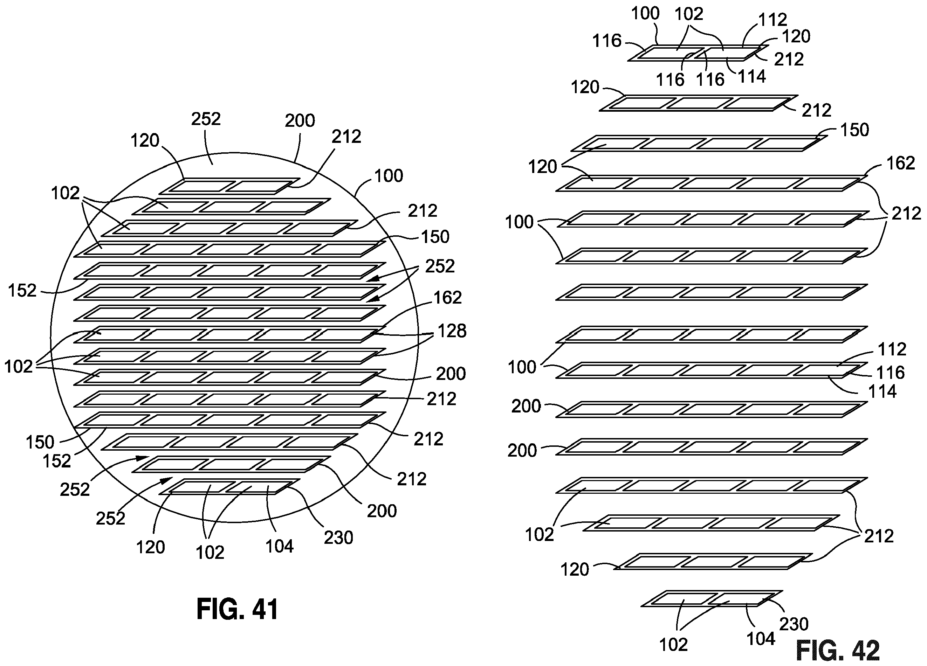

Figure 41 is a cross-sectional view of a tri-component fiber 250 in an embodiment wherein the sacrificial material 252 surrounds a plurality of macro fibers 200. Each one of the macro fibers 200 may be separated by a layer of sacrificial material 252. Each one of the macro fibers 200 has a tape configuration 212 containing a plurality of fiber bodies 102 aligned in side-by-side arrangement with one another and surrounded by matrix material 150. Although the fiber bodies 102 are shown in a parallelogram 230 shape, the fiber bodies 102 may be provided in any shape, without limitation. The sacrificial material 252 of the tri-component fiber 250 may mitigate or reduce surface-energy-drive rounding of the corner regions 162 of the matrix layers 152 as described above. In addition, the sacrificial material 252 of the tri-component fiber 250 may maintain the generally planar, side-by-side alignment of the fiber bodies 102 in each macro fiber 200. Figure 42 is a cross-sectional view of the macro fibers 200 of Figure 41 after removal of the sacrificial material 252 and showing the plurality of individual tape configuration 212 macro fibers 200. Advantageously, the tape configuration 212 may maintain the alignment and positioning of the fiber bodies 102 when positioned in a composite article 270 (Figure 1) which may result in an improvement in the global mechanical properties and the global optical properties of the composite article 270.

Any of the coated fibers 100 embodiments disclosed herein may be incorporated into any composite article 270 of any size, shape, and configuration, without limitation. For example, the composite article 270 may be configured as a windshield, a canopy, a window, a membrane, an armor panel, a structural panel, an architectural panel, or a non-structural article. The composite article 270 may also be configured for use in any vehicular or non-vehicular application, without limitation.

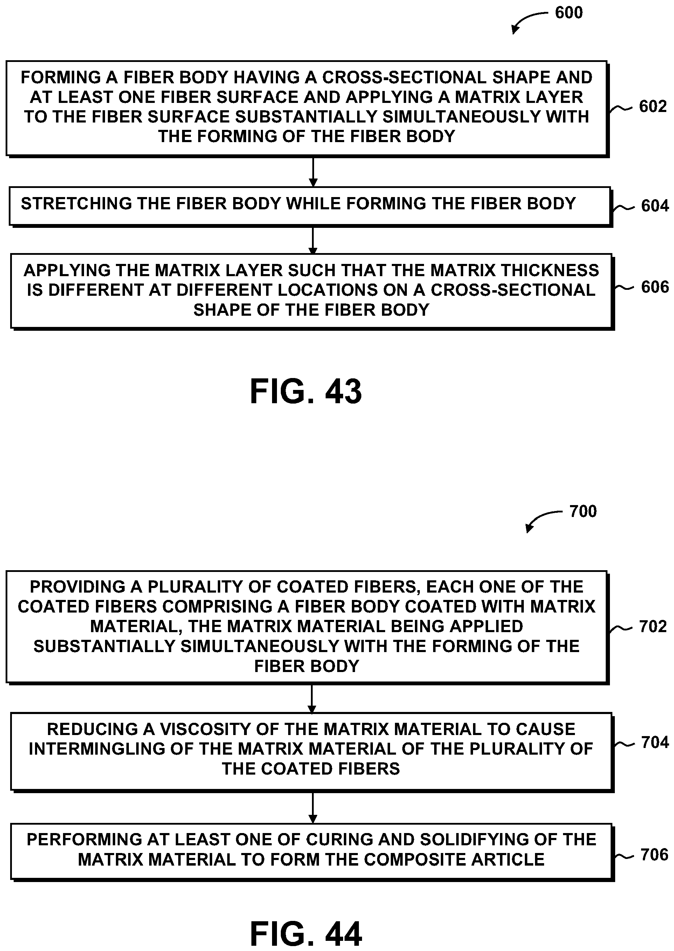

Referring to Figure 43, shown is a flow chart illustrating one or more steps that may be included in a method 600 of manufacturing a coated fiber 100 (Figure 4). The method may include step 602 comprising forming a fiber body 102 (Figure 4) substantially simultaneously with the application of a matrix layer to the fiber body 102. The fiber body 102 may have a specific or predetermined fiber body cross-sectional shape 104 (Figure 4). The fiber body cross-sectional shape 104 may be one of the cross-sectional shapes illustrated in the figures and/or described above or the fiber body 102 may be formed in any one of a variety of other specific cross-sectional shapes. The matrix layer 152 may be applied during the drawing or extruding of the fiber body 102 such as from a fiber body die 412 (Figure 9). For example, the matrix material 150 may be extruded through the matrix layer die 414 (Figure 9) that may be co-located with the fiber body die 412.

Step 604 of the method of 600 of Figure 43 may include stretching the fiber body 102 (Figure 4) while forming the fiber body 102. The fiber body 102 may be stretched along the fiber stretching direction 126 (e.g., along a length of the fiber body 102 - Figure 7) as the fiber body 102 is drawn from a fiber-matrix forming apparatus 400 (Figure 7). The stretching of the fiber body 102 may result in alignment of the fiber molecules which may increase the tensile strength of the fiber body 102 resulting in an improvement in the specific performance of the composite article 270 (Figure 1).

The coated fibers 100 (Figure 24) may be implemented in a macro fiber 200 (Figure 24) embodiment. The macro fiber 200 embodiment may include a plurality of the fiber bodies 102 (Figure 24) formed substantially simultaneously with one another. Advantageously, the macro fiber 200 embodiment may facilitate the alignment of at least a portion of the fiber bodies 102 with one another. In an embodiment, a plurality of macro fibers 200 may be formed in a tape configuration 212 having side-by-side fiber bodies 102 as shown in Figures 41-42. The matrix material 150 (Figure 24) in the macro fiber 200 may maintain the alignment of the fiber bodies 102 when the macro fibers 200 are laid up such as on a composite forming tool (not shown). The fiber bodies 102 in the macro fiber 200 may also be formed in a manner facilitating interlocking of the fiber bodies 102. For example, the fiber bodies 102 may be formed with notch regions 238 (Figure 30) for interlocking with the notch regions 238 of adjacent fiber bodies 102.

In an embodiment, the method may include applying a sacrificial material 252 (Figure 33) substantially surrounding the fiber body 102 (Figure 33) and the matrix layer 152 (Figure 33) during formation thereof. The sacrificial material 252 may improve the dimensional control of the fiber body 102 and may prevent rounding of the surfaces and corners of the fiber body 102. The method 600 may include removing at least a portion of the sacrificial material 252 resulting in one or more fiber bodies 102 formed with improved dimensional control of the fiber body cross-sectional shape 104 (Figure 4).

Step 608 of the method of 600 of Figure 43 may comprise applying the matrix layer 152 (Figure 10) to the fiber body 102 (Figure 10) such that the matrix thickness 154 (Figure 10) is substantially uniform around the cross-sectional shape 104 (Figure 10) of the fiber body 102 as shown in Figure 10. Alternatively, the matrix layer 152 may be applied such that the matrix thickness 154 is different at different locations on the cross-sectional shape 104 of the fiber body 102 as shown in Figure 15. For example, the matrix layer 152 may have a corner region matrix thickness 164 (Figure 15) at the fiber body corners 120 (Figure 15) that is greater than the upper or lower surface matrix thickness 156, 158 (Figure 15). The increased corner region matrix thickness 164 may minimize surface-energy-driven effects that may otherwise round the fiber body corners 120.

Referring to Figure 44, shown is a flowchart having one or more operations that may be included in a method 700 of forming a composite article 270 (Figure 1). The method 700 may include step 702 of providing a plurality of the coated fibers 100 (Figure 4). As described above, each one of the coated fibers 100 may be comprised of a fiber body 102 (Figure 4) that may be coated with matrix material 150 during formation of the fiber body 102. Step 704 of the method 700 may include reducing the viscosity of the matrix material 150 (Figure 4) such as by heating the matrix material 150. The reduction in viscosity of the matrix material 150 may facilitate intermingling of the matrix material 150 of adjacent coated fibers 100.

Step 706 of the method 700 of Figure 44 may include performing at least one of curing and hardening or solidifying of the matrix material 150 (Figure 17) to form the composite article 270 (Figure 17). The method 700 may include forming the composite article 270 in a predetermined configuration. For example, as mentioned above, the composite article may be formed as a windshield, a canopy, a window, a membrane, an armor panel, a structural panel, an architectural panel, a non-structural article, or in any one of a variety of other configurations.

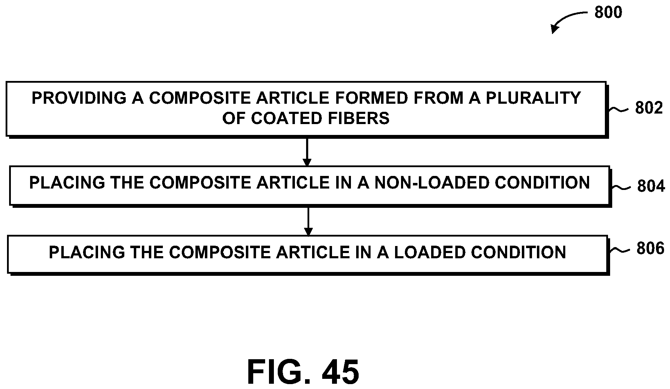

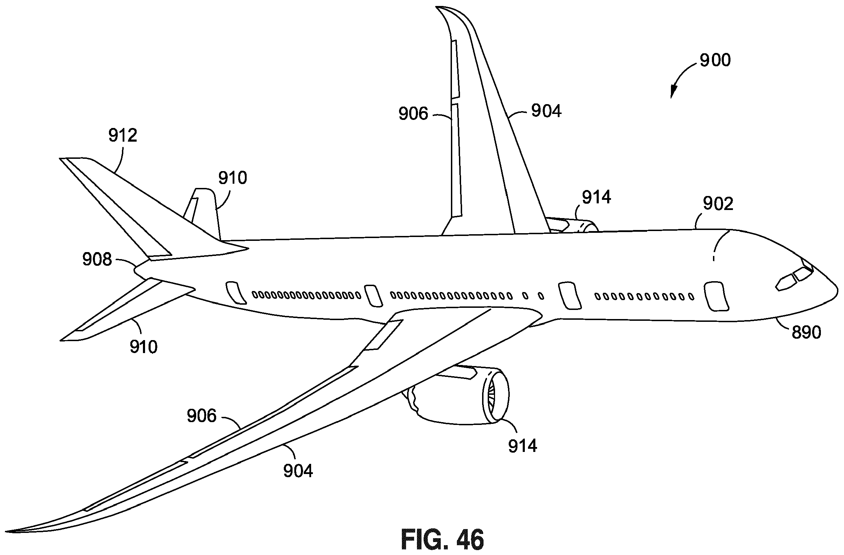

Referring to Figure 45, shown is a flowchart having one or more operations that may be included in a method 800 of implementing the composite article 270 (Figure 1) for use such as in a vehicle 890 (Figure 46). The method 800 of using the composite article 270 may include Step 802 of providing a composite article 270 wherein the composite article 270 is formed from a plurality of coated fibers 100. As described above, each one of the coated fibers 100 may comprise a fiber body 102 and a matrix layer 152 applied to the fiber body 102 substantially simultaneous with the forming of the fiber body 102.

Step 804 of the method 800 of Figure 45 may include placing or maintaining the composite article 270 (Figure 1) in a non-loaded condition. The non-loaded condition may comprise a static condition of the composite article 270. For example, the composite article 270 may comprise a portion of a vehicle 890 that is static or substantially non-moving. In an embodiment, the vehicle 890 may comprise an aircraft 900.

Referring to Figure 46, shown is a perspective illustration of an aircraft 900 which may incorporate one or more embodiments of the composite article 270 (Figure 1) as disclosed herein. The aircraft 900 may include a fuselage 902 having a pair of wings 904 and a tail section 908 which may include a vertical stabilizer 912 and horizontal stabilizers 910. The aircraft 900 may further include control surfaces 906 and propulsion units 914. The aircraft 900 may be generally representative of one of a variety of vehicles that may incorporate one or more of the composite articles 270 as described herein.

In an embodiment, the composite article 270 (Figure 1) may comprise a composite panel 274 (Figure 1). In the non-loaded condition, loads on the composite panel 274 may be limited to static loads due to gravitational force acting on a mass of the composite panel 274 or other static loads acting on the aircraft 900. An example of a non-loaded condition may include the aircraft 900 (Figure 46) fuselage 902 being un-pressurized such as when the aircraft 900 is parked on an airport tarmac.

Step 806 of the method 800 of Figure 45 may include placing the composite article 270 (Figure 1) in a loaded condition wherein the vehicle may be in motion and/or the composite panel 274 may be subjected to a dynamic load. For example, the vehicle may comprise the aircraft 900 (Figure 46) in motion on a runway during takeoff. The loaded condition may also comprise the aircraft 900 fuselage 902 being pressurized. In the loaded condition, loads on the composite article 270 may include any one of compression loads, tension loads, shear loads, torsion loads, or any combination thereof.

According to an aspect of the present disclosure there is provided A composite article, comprising a plurality of fiber bodies; a matrix layer at least partially coating a fiber surface of at least one of the fiber bodies and the matrix layer being applied substantially simultaneously with forming of the fiber body. Advantageously the composite article is configured as at least one of a windshield, a canopy, a window, a membrane, an armor panel, a structural panel, an architectural panel, and a non-structural article.

According to an aspect of the present disclosure there is provided a method of forming a composite article, comprising the steps of providing a plurality of coated fibers, each one of the coated fibers being comprised of a fiber body coated with matrix material during formation of the fiber body, reducing a viscosity of the matrix material to cause intermingling of the matrix material of the plurality of the coated fibers and performing at least one of curing and hardening of the matrix material to form the composite article.

A method of using a composite article, comprising steps of providing a composite article formed from a plurality of coated fibers, each one of the coated fibers comprising a fiber body and a matrix layer applied to the fiber body substantially simultaneous with the forming of the fiber body placing the composite article in a non-loaded condition and placing the composite article in a loaded condition. Advantageously the non-loaded condition is associated with a vehicle being substantially non-moving and the loaded condition is associated with the vehicle in motion. Advantageously the non-loaded condition is associated with an aircraft fuselage being unpressurized; and the loaded condition is associated with the aircraft fuselage being pressurized.

Also provided are the following illustrative, non-exhaustive examples of the subject matter encompassed herein, which relate to:
A coated fiber for a composite article, comprising: a fiber body having at least one fiber surface; and a matrix layer at least partially coating the fiber surface and being applied during formation of the fiber body.

The coated fiber, described in the immediately preceding paragraph, wherein: the fiber body is stretched along a lengthwise direction of the fiber body.

The coated fiber, described in any one of the two immediately preceding paragraphs, wherein: the matrix layer has a matrix thickness that is substantially uniform on the fiber body.

The coated fiber, described in any one of the three immediately preceding paragraphs, wherein: the matrix layer has a matrix thickness that is different at different locations on the fiber body.

The coated fiber, described in the immediately preceding paragraph, wherein: the fiber body has a cross-sectional shape including the fiber surface and at least one fiber body corner; the matrix layer having a corner region matrix thickness at the fiber body corner and a surface matrix thickness at the fiber surface; and the corner region matrix thickness being greater than the surface matrix thickness by at least approximately 10 percent.

The coated fiber, described in any one of the five immediately preceding paragraphs, wherein: the fiber body has a cross-sectional shape comprising at least one of a circle, an oval, an ellipsoid, a closed semi-circle, a kidney shape, a polygon, a triangle, a square, a rectangle, a diamond, a parallelogram, and a trapezoid.

The coated fiber, described in the immediately preceding paragraph, wherein: the cross-sectional shape comprises a sheet having an aspect ratio of a coated fiber width to a coated fiber thickness of at least approximately 10.

The coated fiber, described in the immediately preceding paragraph, wherein the sheet is one of unidirectionally stretched and bidirectionally stretched.

The coated fiber, described in any one of the eight immediately preceding paragraphs, wherein: a plurality of the fiber bodies are contained with the matrix layer to form a macro fiber.

A method of manufacturing a coated fiber for a composite article, comprising steps of: forming a fiber body having at least one fiber surface; and applying a matrix layer to the fiber surface substantially simultaneous with the forming of the fiber body.

The method, described in the immediately preceding paragraph, further comprising a step of: applying the matrix layer such that a matrix thickness is substantially uniform on the fiber body.

The method, described in any one of the two immediately preceding paragraphs, further comprising a step of: applying the matrix layer such that a matrix thickness is different at different locations on the fiber body.

The method, described in any one of the three immediately preceding paragraphs, further comprising steps of: applying the matrix to the fiber surface at a surface matrix thickness; and applying the matrix to a fiber body corner of the fiber body at a corner region matrix thickness that is greater than the surface matrix thickness by at least approximately 10 percent.

The method, described in any one of the four immediately preceding paragraphs, further comprising steps of: forming a plurality of the fiber bodies substantially simultaneously with one another, each one of the fiber bodies having at least one fiber surface; and applying the matrix layer to the fiber surfaces substantially simultaneous with the forming of the fiber bodies to produce a macro fiber.

The method, described in any one of the five immediately preceding paragraphs, further comprising a step of: applying a sacrificial material around the fiber body and the matrix layer during formation of the fiber body.

Additional modifications and improvements of the present disclosure may be apparent to those of ordinary skill in the art. Thus, the particular combination of parts described and illustrated herein is intended to represent only certain embodiments of the present disclosure and is not intended to serve as limitations of alternative embodiments or devices within the spirit and scope of the disclosure.

## Claims

1. A coated fiber for a substantially transparent composite article, comprising:
a fiber body (102), comprising a fiber surface, the fiber body (102) comprising substantially transparent fibers; and
a matrix layer (152) at least partially coating the fiber surface and being applied during formation of the fiber body (102), the matrix layer (152) comprising a substantially transparent polymeric matrix.

2. The coated fiber according to Claim 1, wherein:
the fiber body (102) is stretched along a lengthwise direction of the fiber body (102).

3. The coated fiber according to Claim 1 or 2, wherein:
the matrix layer (152) has a matrix thickness that is substantially uniform on the fiber body (102).

4. The coated fiber according to Claim 1 or 2, wherein:
the matrix layer (152) has a matrix thickness that is different at different locations on the fiber body (102).

5. The coated fiber according to Claim 4, wherein:
the fiber body (102) has a cross-sectional shape, comprising the fiber surface and at least one fiber body corner (120);
the matrix layer (152) comprises a corner region matrix thickness at the fiber body corner (120) and a surface matrix thickness at the fiber surface; and
the corner region matrix thickness is greater than the surface matrix thickness by at least approximately 10 percent.

6. The coated fiber according to any one of Claims 1-5, wherein:
the fiber body (102) has a cross-sectional shape that is one of a circle, an oval, an ellipsoid, a closed semi-circle, a kidney shape, a polygon, a triangle, a square, a rectangle, a diamond, a parallelogram, and a trapezoid.

7. The coated fiber according to Claim 6, wherein:
the cross-sectional shape (104) of the fiber body is a sheet (228) having an aspect ratio of at least approximately 10, wherein the aspect ratio is a ratio of a coated fiber width (124) to a coated fiber thickness (122).

8. The coated fiber according to Claim 7, wherein the sheet is one of unidirectionally stretched and bidirectionally stretched.

9. The coated fiber according to any one of Claims 1-8, wherein:
a plurality of the fiber bodies (102) is contained within the matrix layer (152) to form a macro fiber (200).

10. A method of manufacturing a coated fiber for a substantially transparent composite article, the method comprising steps of:
forming a fiber body (102), comprising a fiber surface and substantially transparent fibers; and
applying a matrix layer (152) to the fiber surface substantially simultaneously with the step of forming of the fiber body (102), the matrix layer (152) comprising a substantially transparent polymeric matrix.

11. The method according to Claim 10, further comprising a step of:
applying the matrix layer (152) to the fiber surface such that a matrix thickness is substantially uniform on the fiber body (102).

12. The method according to Claim 10 or 11, further comprising a step of:
applying the matrix layer (152) such that a matrix thickness is different at different locations on the fiber body (102).

13. The method according to any one of Claims 10-12, further comprising steps of:
applying the matrix layer (152) to the fiber surface at a surface matrix thickness; and
applying the matrix layer (152) to a fiber body corner (120) of the fiber body (102) at a corner region matrix thickness that is greater than the surface matrix thickness by at least approximately 10 percent.

14. The method according to any one of Claims 10-13 further comprising steps of:
forming a plurality of fiber bodies (102) substantially simultaneously with one another, each one of the plurality of fiber bodies (102) comprising a fiber surface; and
substantially simultaneously with the step of forming of the plurality of fiber bodies (102), applying the matrix layer (152) to the fiber surfaces of the plurality of fiber bodies (102) to produce a macro fiber (200).

15. The method according to any one of Claims 10-14, further comprising a step of:
applying a sacrificial material around the fiber body (102) and the matrix layer during formation of the fiber body (102).
